# EUROPÄISCHE PATENTSCHRIFT

(11) **EP 1 868 398 B1**
(45) Veröffentlichungstag und Bekanntmachung des Hinweises auf die Patenterteilung: **31.10.2012**
(21) Anmeldenummer: 07011579.5
(22) Anmeldetag: 13.06.2007
(51) Int. Cl.: H04W 24/08

(54) **Lokalisierung von Störungen in Kommunikationsverbindungen**
Localisation of preturbations in communication connections
Localisation de perturbations dans des liaisons de communication

(30) Priorität: 14.06.2006 DE 102006027936
(43) Veröffentlichungstag der Anmeldung: 19.12.2007
(73) Patentinhaber: Vodafone Holding GmbH, 40213 Düsseldorf (DE)
(72) Erfinder: Schulz, Sebastian, 42579 Heiligenhaus (DE); Stanke, Jürgen, 59425 Unna (DE); Dittner, Helen, 40667 Meerbusch (DE)
(74) Vertreter: Weisbrodt, Bernd

(56) Entgegenhaltungen:
- GB-A- 2 406 474
- US-A1- 2005 097 209
- "Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-SA5, Nr. V650, Dezember 2005 (2005-12), XP014032829 ISSN: 0000-0001

## Beschreibung

Die vorliegende Erfindung betrifft ein Verfahren zur Lokalisierung von Störungen in einer Kommunikationsverbindung eines in Mobilfunknetzen betreibbaren mobilen Endgerätes, wobei das mobile Endgerät für einen Zugang zu einem Mobilfunknetz ein Mobilfunkteilnehmer-Identifikations-Modul nutzt, das Heimatregister des Mobilfunkteilnehmer-Identifikations-Moduls des mobilen Endgerätes sich in einem ersten Mobilfunknetz befindet, das mobile Endgerät in einem zweiten Mobilfunknetz betrieben wird und Einrichtungen des ersten Mobilfunknetzes und Einrichtungen des zweiten Mobilfunknetzes zu Kommunikationszwecken miteinander verbindbar sind.

Gegenstand der vorliegenden Erfindung ist ferner ein Netzknoten eines Mobilfunknetzes, welcher zur Ausführung eines erfindungsgemäßen Verfahrens ausgebildet ist.

Verfahren und Einrichtungen, die einen Betrieb von in Mobilfunknetzen betreibbaren mobilen Endgeräten in einem ersten Mobilfunknetz und einem zweiten Mobilfunknetz ermöglichen, sind im Stand der Technik in zahlreichen Ausgestaltungen bekannt.

Aus der GB 2 406 474 B ist darüber hinaus bekannt, ein OMC (operation and management centre) zu konfigurieren, um nachverfolgen zu können, welche Dienste einem Mobilfunkkunden eines ersten Mobilfunknetzes beim Roaming von einem zweiten Mobilfunknetz bereitgestellt werden. Hierzu erfolgt durch die Registrierung eines Roaming Nutzers im VPLMN eine Triggerung zum Sammeln und Weiterleiten von auf die bereitgestellten Dienste bezogenen Daten, aus denen Performance-Statistiken erstellt werden.

Aus der US 2005/0097209 A1 ist ferner bekannt, in einem Mobilfunknetz an unterschiedlichen Schnittstellen, unter anderem direkt am mobilen Endgerät, performancebezogene Daten zu sammeln, um auf diese Weise die Dienste, die der Endkunde nutzt, hinsichtlich der Qualität und der Erfahrung, die der Endkunden mit den Diensten macht, bewerten zu können.

Anwendung finden derartige Verfahren und Einrichtungen insbesondere im Zusammenhang mit einem sogenannten Roaming, wobei dem Nutzer eines mobilen Endgerätes eine Kommunikation mit selbigem auch in Mobilfunknetzen ermöglicht wird, die nicht von seinem Mobilfunknetzbetreiber unterhalten werden.

Nachteilig dabei ist, dass Störungen in einer Kommunikationsverbindung eines in einem zweiten Mobilfunknetz betriebenen mobilen Endgerätes nicht seitens des ersten Mobilfunknetzes und damit seitens des entsprechenden Betreibers des ersten Mobilfunknetzes festgestellt werden können, zumindest dann nicht, wenn die Störungen in dem zweiten Mobilfunknetz begründet sind. Von dem Nutzer eines in einem zweiten Mobilfunknetz betriebenen mobilen Endgerätes kommende Beanstandungen beziehungsweise Reklamationen hinsichtlich Störungen in einer Kommunikationsverbindung des in einem zweiten Mobilfunknetz betriebenen mobilen Endgerätes fallen mangels Nachprüfbarkeit dabei dann in der Regel auf den Betreiber des ersten Mobilfunknetzes zurück. Hierdurch wird insbesondere das Verhältnis zwischen dem Mobilfunknetzbetreiber und seinem Kunden als Nutzer des Mobilfunknetzes unnötig gestört, was sich letztlich auf die Kundenzufriedenheit nachteilig auswirken kann. Seitens des Mobilfunknetzbetreibers ist diesem Umstand in der Regel bisher nur durch einen kulanzweise erfolgenden Verzicht auf eine Abrechnung der Kommunikationsverbindung entgegen zu treten.

Der vorliegenden Erfindung liegt in Anbetracht dieses Standes der Technik die Aufgabe zugrunde, eine Lokalisierung von Störungen in einer Kommunikationsverbindung eines in Mobilfunknetzen betreibbaren mobilen Endgerätes zu ermöglichen, insbesondere bei einem Betrieb eines mobilen Endgerätes eines ersten Mobilfunknetzes in einem zweiten Mobilfunknetz.

Zur technischen Lösung wird ein Verfahren zur Lokalisierung von Störungen in einer Kommunikationsverbindung eines in Mobilfunknetzen betreibbaren mobilen Endgerätes gemäß Anspruch 1 vorgeschlagen.

Das Verfahren erlaubt vorteilhafterweise, dass von wenigstens einer Einrichtung des ersten Mobilfunknetzes eine Verfügbarkeitsabfrage und/oder eine Leistungsfähigkeitsabfrage an wenigstens eine an der Verwaltung des Aufenthalts eines mobilen Endgerätes im zweiten Mobilfunknetz und/oder an einer Kommunikationsverbindung des mobilen Endgerätes unter Nutzung des zweiten Mobilfunknetzes beteiligten Einrichtung des zweiten Mobilfunknetzes gesendet wird, die wenigstens eine an der Verwaltung des Aufenthalts eines mobilen Endgerätes im zweiten Mobilfunknetz und/oder an einer Kommunikationsverbindung eines mobilen Endgerätes unter Nutzung des zweiten Mobilfunknetzes beteiligten Einrichtung des zweiten Mobilfunknetzes auf die Verfügbarkeitsabfrage und/oder die Leistungsfähigkeitsabfrage wenigstens eine Verfügbarkeitsinformation und/oder wenigstens eine Leistungsfähigkeitsinformation hinsichtlich einer Kommunikationsverbindung eines mobilen Endgerätes unter Nutzung des zweiten Mobilfunknetzes ermittelt, die wenigstens eine ermittelte Verfügbarkeitsinformation und/oder wenigstens eine ermittelte Leistungsfähigkeitsinformation von der wenigstens einen an der Verwaltung des Aufenthalts eines mobilen Endgerätes im zweiten Mobilfunknetz und/oder an einer Kommunikationsverbindung eines mobilen Endgerätes unter Nutzung des zweiten Mobilfunknetzes beteiligten Einrichtung des zweiten Mobilfunknetzes an die wenigstens eine Einrichtung des ersten Mobilfunknetzes gesendet wird und seitens der wenigstens einen Einrichtung des ersten Mobilfunknetzes anhand der empfangenden wenigstens einen Verfügbarkeitsinformation und/oder wenigstens einen Leistungsfähigkeitsinformation wenigstens eine Information hinsichtlich einer Kommunikationsverbindung eines mobilen Endgerätes unter Nutzung des zweiten Mobilfunknetzes bestimmt wird.

Die erfindungsgemäße Ermittlung und Übertragung einer Verfügbarkeitsbeziehungsweise Leistungsfähigkeitsinformation einer Kommunikationsverbindung eines mobilen Endgerätes aus dem ersten Mobilfunknetz bei einem Betrieb im zweiten Mobilfunknetz ermöglicht vorteilhafterweise eine Lokalisierung von Störungen in der Kommunikationsverbindung seitens des ersten Mobilfunknetz, insbesondere derart, dass Beanstandungen beziehungsweise Reklamationen hinsichtlich Störungen in der Kommunikationsverbindung im zweiten Mobilfunknetz seitens des Mobilfunknetzbetreibers des ersten Mobilfunknetzes nachprüfbar beziehungsweise dokumentierbar sind.

Vorteilhafterweise werden unter Nutzung der wenigstens einen Information hinsichtlich einer Kommunikationsverbindung eines mobilen Endgerätes unter Nutzung des zweiten Mobilfunknetzes seitens des ersten Mobilfunknetzes zu erwartende Verfügbarkeitsinformationen und/oder Leistungsfähigkeitsinformationen hinsichtlich einer Kommunikationsverbindung eines mobilen Endgerätes unter Nutzung des zweiten Mobilfunknetzes bestimmt. Erfindungsgemäß wird hierdurch ein proaktives Erkennen der Qualität einer Kommunikationsverbindung hinsichtlich Verfügbarkeit und/oder Leistungsfähigkeit seitens des ersten Mobilfunknetzes realisiert. Seitens des ersten Mobilfunknetzes können so Kunden des ersten Mobilfunknetzes entsprechend ihrem Kundenstatus, beispielsweise hinsichtlich deren Wichtigkeit und/oder Priorität seitens des ersten Mobilfunknetzes im zweiten Mobilfunknetz entsprechende Verfügbarkeiten und/oder Leistungsfähigkeiten zugewiesen beziehungsweise eine entsprechende Zuweisung veranlasst werden. Für entsprechende Maßnahmen können vorteilhafterweise zwischen den entsprechenden Einrichtungen des ersten Mobilfunknetzes entsprechende geeignete Steuerinformationen an Einrichtungen des zweiten Mobilfunknetzes übertragen und von diesen vorteilhafterweise zur Nutzung für Kommunikationsverbindungen des mobilen Endgerätes im zweiten Mobilfunknetz genutzt beziehungsweise berücksichtigt werden können.

Gemäß einer weiteren vorteilhaften Ausgestaltung der Erfindung sind die zu Kommunikationszwecken miteinander verbindbaren Einrichtungen des ersten Mobilfunknetzes und des zweiten Mobilfunknetzes Vermittlungsstellen bereitstellende Einrichtungen des ersten und des zweiten Mobilfunknetzes.

Eine weitere vorteilhafte Ausgestaltung der Erfindung ist gekennzeichnet durch eine Anwendung für Dienste in Mobilfunknetzen gemäß dem GPRS- und/oder UMTS-Funknetzstandard (GPRS: General Packet Radio Services; UMTS: Universal Mobile Telecommunications System), vorzugsweise durch eine Anwendung für paketorientierte Datendienste.

In einer weiteren vorteilhaften Ausgestaltung der Erfindung werden die bestimmten Informationen hinsichtlich einer Kommunikationsverbindung eines mobilen Endgerätes unter Nutzung des zweiten Mobilfunknetzes zu Zwecken der Abrechnung von Kommunikationsverbindungen eines im zweiten Mobilfunknetz betriebenen mobilen Endgerätes genutzt. Eine entsprechende Nutzung erfolgt dabei vorteilhafterweise seitens des ersten Mobilfunknetzes beziehungsweise seitens des Mobilfunknetzbetreibers des ersten Mobilfunknetzes.

Eine weitere vorteilhafte Ausgestaltung der Erfindung sieht vor, dass seitens eines Netzknotens des ersten Mobilfunknetzes die folgenden Verfahrensschritte ausgeführt werden:
- Senden einer Verfügbarkeitsanfrage und/oder einer Leistungsfähigkeitsabfrage hinsichtlich einer Kommunikationsverbindung eines mobilen Endgerätes unter Nutzung des zweiten Mobilfunknetzes zumindest an wenigstens einen Netzknoten des zweiten Mobilfunknetzes,
- Empfangen wenigstens einer Verfügbarkeitsinformation und/oder wenigstens einer Leistungsfähigkeitsinformation hinsichtlich einer Kommunikationsverbindung eines mobilen Endgerätes unter Nutzung des zweiten Mobilfunknetzes und
- Bestimmung wenigstens einer Information hinsichtlich einer Kommunikationsverbindung eines mobilen Endgerätes unter Nutzung des zweiten Mobilfunknetzes anhand der empfangenden wenigstens einen Verfügbarkeitsinformation und/oder wenigstens einen Leistungsfähigkeitsinformation.

Eine weitere vorteilhafte Ausgestaltung der Erfindung sieht vor, dass seitens eines Netzknotens des zweiten Mobilfunknetzes die folgenden Verfahrensschritte ausgeführt werden:
- Empfangen einer Verfügbarkeitsabfrage und/oder wenigstens einer Leistungsfähigkeitsabfrage hinsichtlich einer Kommunikationsverbindung eines mobilen Endgerätes unter Nutzung des zweiten Mobilfunknetzes,
- Ermittlung wenigstens einer Verfügbarkeitsinformation und/oder wenigstens einer Leistungsfähigkeitsinformation hinsichtlich einer Kommunikationsverbindung eines mobilen Endgerätes unter Nutzung des zweiten Mobilfunknetzes auf die Verfügbarkeitsabfrage und/oder die Leistungsfähigkeitsabfrage und
- Senden der wenigstens einen ermittelten Verfügbarkeitsinformation und/oder der wenigstens einen ermittelten Leistungsfähigkeitsinformation zumindest an wenigstens einen Netzknoten des ersten Mobilfunknetzes.

Ferner wird mit der vorliegenden Erfindung ein Netzknoten eines Mobilfunknetzes gemäß Anspruch 9 bereitgestellt.

Weitere Einzelheiten, Merkmale und Vorteile der Erfindung werden nachfolgend anhand des in der Figur der Zeichnung dargestellten Ausführungsbeispiels der Erfindung näher erläutert. Dabei zeigt:

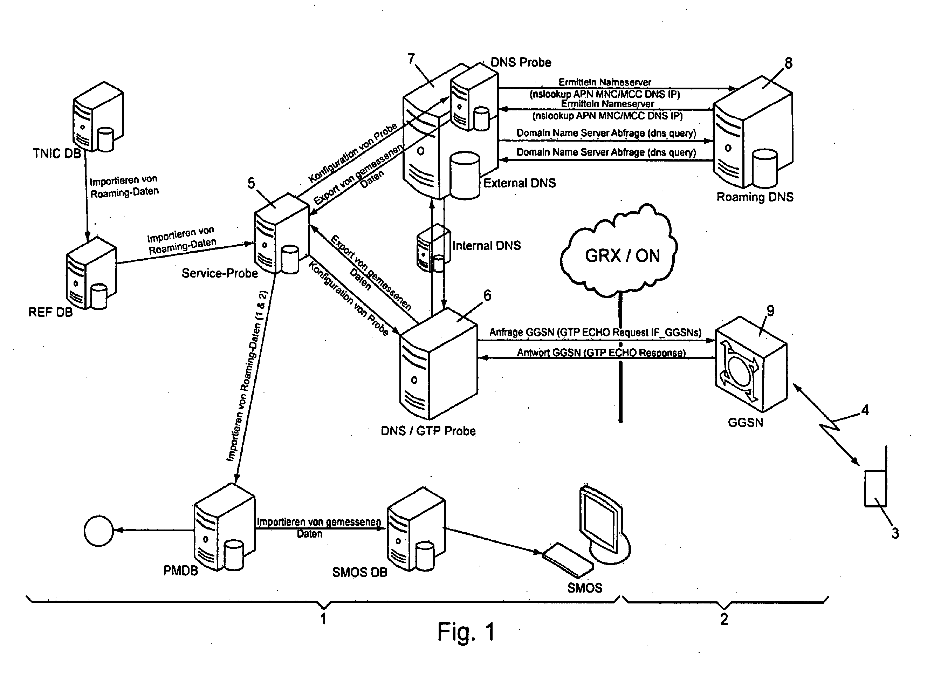

- Fig.1: in einer schematischen Prinzipdarstellung ein Ausführungsbeispiel für eine erfindungsgemäße Lokalisierung von Störungen in einer Kommunikationsverbindung eines mobilen Endgerätes eines ersten Mobilfunknetzes in einem zweiten Mobilfunknetz.

Fig. 1 zeigt in einer Prinzipdarstellung die an dem Aufbau, der Aufrechterhaltung und/oder der Verwaltung von Kommunikationsverbindungen in Mobilfunknetzen beteiligten Einrichtungen eines ersten Mobilfunknetzes 1 und eines zweiten Mobilfunknetzes 2. Dabei sind in Fig. 1 symbolisch die bei einem sogenannten Roaming zwischen dem ersten Mobilfunknetz 1 und dem zweiten Mobilfunknetz 2 beteiligten Einrichtungen in Form von Rechnern mit Datenbanken dargestellt. Zwischen den einzelnen Einrichtungen, also den Rechnern und Datenbanken der Mobilfunknetze 1 und 2 erfolgen dabei untereinander als auch miteinander verschiedene Signalisierungen zum Aufbau, der Aufrechterhaltung, der Verwaltung und insbesondere zur Abrechnung entsprechender Kommunikationsverbindungen.

Vorliegend wird ein mobiles Endgerät 3 in Form eines Mobilfunktelefons mit einem Mobilfunkteilnehmer-Identlfikations-Modul des ersten Mobilfunknetzes 1, vorliegend in Form einer in Fig. 1 nicht explizit dargestellten SIM-Karte (SIM: Subscriber Identifikation Modul) des ersten Mobilfunknetzes 1, im zweiten Mobilfunknetz 2 betrieben. Der Betrieb des mobilen Endgerätes 3 mit der SIM-Karte des ersten Mobilfunknetzes 1 im zweiten Mobilfunknetz 2 erfolgt dabei insbesondere aus abrechnungstechnischen Gründen mittels sogenanntem Roaming. Der Betrieb des mobilen Endgerätes 3 im zweiten Mobilfunknetz 2 über entsprechende Kommunikationsverbindungen ist in Fig. 1 symbolisch durch den mit 4 gekennzeichneten Doppelpfeil dargestellt.

Zur Lokalisierung von Störungen in einer Kommunikationsverbindung 4 zwischen dem mobilen Endgerät 3 mit dem zweiten Mobilfunknetz 2 im sogenannten Roaming-Betrieb ist seitens des ersten Mobilfunknetzes 1 mit einer Einrichtung 5 als sogenanntem Service-Probe ein Content-Probing-System eingerichtet, welches automatisiert Überprüfungen verschiedener Dienste des Mobilfunknetzes aus Endkundensicht, also aus Sicht eines mobilen Endgerätes, durchführt. Der Service-Probe 5 überprüft dabei insbesondere automatisiert die Verfügbarkeit des Roaming Partners, also des Mobilfunknetzes 2 und ermittelt von diesem für das Roaming bereitgestellte netzspezifische Parameter (Benchmarking der Carrier). Die Einrichtung 5 ist dazu mit der Einrichtung 6 zu Kommunikationszwecken verbindbar. Die Einrichtung 6 (DNS/GTP-Probe) sendet daraufhin über die Einrichtung 7 eine Anfrage (nslookup) an den DNS-Server 8 des Mobilfunknetzes 2, welcher für das sogenannte Roaming zuständig ist (Roaming DNS). Mit dieser Abfrage (nslookup) ist es möglich, dass sogenannte GRX-Netzwerk (GRX: GPRS Roaming eXchange), das ON-Netzwerk oder andere Träger (Carrier) auf Verfügbarkeit und/oder Leistungsfähigkeit zu überprüfen. Auf die entsprechende Abfrage (nslookup) sendet die Einrichtung 8 (Roaming DNS) eine Antwort an die Einrichtung 7 und von dieser an die Einrichtung 6 (DNS/GTP-Probe).

Ferner ist die Einrichtung 6 (DNS/GTP-Probe) ausgebildet einen sogenannten GTP-Test (GTP: GPRS Tunneling Protokoll) an Netzknoten 9 des zweiten Mobilfunknetzes, in Fig. 1 beispielhaft einen GGSN (GGSN: Gateway GPRS Support Node), zu richten. Dabei wird mittels einer entsprechenden Abfrage, vorliegend einem sogenannten GTP Echo Request die Verfügbarkeit des zweiten Mobilfunknetzes 2 beziehungsweise dessen Netzknotens 9 abgefragt und überprüft. Dabei stellt der GTP Echo Request einen sogenannten Ping, also eine Anfrage zur Überprüfung einer Erreichbarkeit einer Einrichtung in einem Netzwerk, über das GTP dar und simuliert quasi einen Roaming-Kunden. Die erfindungsgemäße Nutzung des GTP für eine entsprechende Verfügbarkeitsabfrage erlaubt dabei eine Lokalisierung von Störungen in Kommunikationsverbindungen 4, ohne dass aufwändige Änderungen an den Einrichtungen der Mobilfunknetze 1 und 2 erforderlich wären. Die erfindungsgemäße Nutzung des GTP ist dabei besonders vorteilhaft. Vorteilhafterweise wird eine entsprechende Abfrage (GTP Echo Request) in periodischen Intervallen vom ersten Mobilfunknetz 1, also von der Einrichtung 6 (DNS/GTP-Probe) an Netzknoten des zweiten Mobilfunknetzes, vorliegend dem Netzknoten 9 (GGSN) gerichtet. Eine entsprechende Abfrage wird vorteilhafterweise in periodischen Zeitintervallen von 3 bis 8 Minuten, besonderes bevorzugt alle 5 Minuten durchgeführt. Die entsprechende Abfrage des Netzknotens 9 liefert, sofern dieser verfügbar ist, eine entsprechende Antwort (GTP Echo Response), welche an die Einrichtung 6 (DNS/GTP-Probe) des ersten Mobilfunknetzes zurückgesendet wird.

Die an die Einrichtung 6 zum einen von dem Roaming DNS 8 und zum anderen von dem Netzknoten 9 (GGSN) zurückgesendeten Antworten werden von der Einrichtung 6 an die Einrichtung 5 (Service Probe) zurückgesandt, welche vorliegend anhand der ermittelten Antworten wenigstens eine Verfügbarkeitsinformation und/oder wenigstens eine Leistungsfähigkeitsinformation hinsichtlich einer Kommunikationsverbindung 4 eines mobilen Endgerätes 3 bei Nutzung im zweiten Mobilfunknetz 2 ermöglicht.

Das in der Fig. der Zeichnung dargestellte und beschriebene Ausführungsbeispiel dient lediglich der Erläuterung der Erfindung und ist für diese nicht beschränkend.

### Bezugszeichenliste:

1 erstes Mobilfunknetz
2 zweites Mobilfunknetz
3 mobiles Endgerät
4 Kommunikationsverbindung
5 Einrichtung erstes MobilfunknetzlService-Probe
6 Einrichtung erstes Mobilfunknetz/DNS/GTP-Probe
7 Einrichtung erstes Mobilfunknetz/DNS-Probe
8. Einrichtung zweites Mobilfunknetz/Roaming DNS
9. Netzknoten zweites Mobilfunknetz/GGSN

## Patentansprüche

1. Verfahren zur Lokalisierung von Störungen in einer Kommunikationsverbindung (4) eines in Mobilfunknetzen (1, 2) betreibbaren mobilen Endgerätes (3),
wobei
das mobile Endgerät (3) für einen Zugang zu einem Mobilfunknetz (1, 2) ein Mobilfunkteilnehmer-Identifikations-Modul (SIM-Karte) nutzt,
das Heimatregister (HLR) des Mobilfunkteilnehmer-Identifikations-Moduls (SIM-Karte) des mobilen Endgerätes (3) sich in einem ersten Mobilfunknetz (1) befindet,
das mobile Endgerät (3) in einem zweiten Mobilfunknetz (2) betrieben wird und
Einrichtungen (6, 7) des ersten Mobilfunknetzes (1) und Einrichtungen des zweiten Mobilfunknetzes (8, 9) zu Kommunikationszwecken miteinander verbindbar sind,
**dadurch gekennzeichnet,**
**dass**
von einer Einrichtung (5; 7, DNS-Probe) des ersten Mobilfunknetzes (1) eine Verfügbarkeitsabfrage an eine an der Verwaltung des Aufenthalts eines mobilen Endgerätes (3) im zweiten Mobilfunknetz (2) beteiligten Einrichtung (8) des zweiten Mobilfunknetzes (2) gesendet wird,
die an der Verwaltung des Aufenthalts eines mobilen Endgerätes (3) im zweiten Mobilfunknetz (2) unter Nutzung des zweiten Mobilfunknetzes (2) beteiligte Einrichtung (8) des zweiten Mobilfunknetzes (2) auf die Verfügbarkeitsabfrage wenigstens einen von dem zweiten Mobilfunknetz (2) bereitgestellten netzspezifischen Parameter hinsichtlich der Verfügbarkeit einer Kommunikationsverbindung (4) eines mobilen Endgerätes (3) unter Nutzung des zweiten Mobilfunknetzes (2) ermittelt, der wenigstens eine ermitteite Parameter von der an der Verwaltung des Aufenthalts eines mobilen Endgerätes (3) im zweiten Mobilfunknetz (2) beteiligten Einrichtung (8) des zweiten Mobilfunknetzes (2) an die Einrichtung (7, DNS-Probe) des ersten Mobilfunknetzes (1) und von dieser an eine weitere Einrichtung (6) des ersten Mobilfunknetzes (1) gesendet wird,
seitens der weiteren Einrichtung (6) des ersten Mobilfunknetzes (1) eine Verfügbarkeitsabfrage (GTP-Test) an eine an einer Kommunikationsverbindung (4) eines mobilen Endgerätes (3) unter Nutzung des zweiten Mobilfunknetzes (2) beteiligten Einrichtung (9) des zweiten Mobilfunknetzes (2) gerichtet wird,
die an der Kommunikationsverbindung (4) eines mobilen Endgerätes (3) unter Nutzung des zweiten Mobilfunknetzes (2) beteiligte Einrichtung (9) des zweiten Mobilfunknetzes (2) auf die Verfügbarkeitsabfrage eine Vertügbarkeitsantwort an die wenigstens eine weitere Einrichtung (6) des ersten Mobilfunknetzes (1) zurücksendet,
und seitens einer Einrichtung (5, 6, 7) des ersten Mobilfunknetzes (1) anhand des wenigstens einen Parameters und der Verfügbarkeitsantwort wenigstens eine Verfügbarkeits- und/oder Leistungsfähigkeitsinformation hinsichtlich einer Kommunikationsverbindung (4) eines mobilen Endgerätes (3) unter Nutzung des zweiten Mobilfunknetzes (2) bestimmt wird.

2. Verfahren nach Anspruch 1, **dadurch gekennzeichnet, dass** unter Nutzung der wenigstens einen Verfügbarkeits- und/oder Leistungsfähigkeitsinformation hinsichtlich einer Kommunikationsverbindung (4) eines mobilen Endgerätes (3) unter Nutzung des zweiten Mobilfunknetzes (2) seitens des ersten Mobilfunknetzes (1) zu erwartende Verfügbarkeitsinformationen und/oder Leistungsfähigkeitsinformationen hinsichtlich einer Kommunikationsverbindung (4) eines mobilen Endgerätes (3) unter Nutzung des zweiten Mobilfunknetzes (2) bestimmt werden.

3. Verfahren nach Anspruch 1 oder Anspruch 2, **dadurch gekennzeichnet, dass** die zu Kommunikationszwecken miteinander verbindbaren Einrichtungen des ersten Mobilfunknetzes (1) und des zweiten Mobilfunknetzes (2) Vermittlungsstellen bereitstellende Einrichtungen des ersten Mobilfunknetzes (1) und des zweiten Mobilfunknetzes (2) sind.

4. Verfahren nach einem der Ansprüche 1 bis 3, **gekennzeichnet durch** eine Anwendung für Dienste in Mobilfunknetzen gemäß dem GPRS- und/oder UMTS-Funknetzstandard, vorzugsweise **durch** eine Anwendung für paketorientierte Datendienste.

5. Verfahren nach einem der Ansprüche 1 bis 4, **dadurch gekennzeichnet, dass** die bestimmten Verfügbarkeits- und/oder Leistungsfähigkeitsinformationen hinsichtlich einer Kommunikationsverbindung (4) eines mobilen Endgerätes (3) unter Nutzung des zweiten Mobilfunknetzes (2) zu Zwecken der Abrechnung von Kommunikationsverbindungen eines im zweiten Mobilfunknetz (2) betriebenen mobilen Endgerätes (3) genutzt werden.

6. Verfahren nach einem der Ansprüche 1 bis 5, **dadurch gekennzeichnet, dass** seitens eines Netzknotens des ersten Mobilfunknetzes (1), die folgenden Schritte ausgeführt werden:
- Senden einer Verfügbarkeitsabfrage und/oder einer Leistungsfähigkeitsabfrage hinsichtlich einer Kommunikationsverbindung (4) eines mobilen Endgerätes (3) unter Nutzung des zweiten Mobilfunknetzes (2) zumindest an wenigstens einen Netzknoten des zweiten Mobilfunknetzes (2),
- Empfangen wenigstens eines netzspezifischen Parameters hinsichtlich Verfügbarkeit und/oder Leistungsfähigkeit einer Kommunikationsverbindung (4) eines mobilen Endgerätes (3) unter Nutzung des zweiten Mobilfunknetzes (2),
- Senden einer Verfügbarkeitsabfrage (GTP-Test) an einen an der Kommunikationsverbindung (4) eines mobilen Endgerätes (3) im zweiten Mobilfunknetz (2) beteiligten Netzknoten (9) des zweiten Mobilfunknetzes (2) hinsichtlich Verfügbarkeit dieses Netzknotens (9) im zweiten Mobilfunknetz (2).
- Empfangen einer Verfügbarkeitsantwort dieses an der Kommunikationsverbindung (4) eines mobilen Endgerätes (3) im zweiten Mobilfunknetz (2) beteiligten Netzknotens (9) des zweiten Mobilfunknetzes (2) auf die Verfügbarkeitsabfrage (GTP-Test),
- Bestimmung wenigstens einer Verfügbarkeits- und/oder Leistungsfähigkeitsinformation hinsichtlich einer Kommunikationsverbindung (4) eines mobilen Endgerätes (3) unter Nutzung des zweiten Mobilfunknetzes (2) anhand des wenigstens einen empfangenen Parameters und der empfangenen Verfügbarkeitsantwort.

7. Verfahren nach einem der Ansprüche 1 bis 6, **dadurch gekennzeichnet, dass** seitens eines Netzknotens des zweiten Mobilfunknetzes (2), die folgenden Schritte ausgeführt werden:
- Empfangen einer Verfügbarkeitsabfrage und/oder wenigstens einer Leistungsfähigkeitsabfrage hinsichtlich einer Kommunikationsverbindung (4) eines mobilen Endgerätes (3) unter Nutzung des zweiten Mobilfunknetzes (2),
- Ermittlung wenigstens eines netzspezifischen Parameters hinsichtlich Verfügbarkeit und/oder Leistungsfähigkeit einer Kommunikationsverbindung (4) eines mobilen Endgerätes (4) unter Nutzung des zweiten Mobilfunknetzes (2) auf die Verfügbarkeitsabfrage und/oder die Leistungsfähigkeitsabfrage und
- Senden des wenigstens einen ermittelten Parameters zumindest an wenigstens einen Netzknoten des ersten Mobilfunknetzes (1).

8. Verfahren nach einem der Ansprüche 1 bis 7, **dadurch gekennzeichnet, dass** seitens eines Netzknotens (9) des zweiten Mobilfunknetzes (2), die folgenden Schritte ausgeführt werden:
- Empfangen einer Verfügbarkeitsabfrage,
- Senden einer Verfügbarkeitsantwort auf die empfangene Verfügbarkeitsabfrage zumindest an wenigstens einen Netzknoten des ersten Mobilfunknetzes (1).

9. Netzknoten in einem ersten Mobitfunknetz (1),
welcher
ausgebildet und/oder eingerichtet ist, im Zusammenhang mit der Durchführung eines Verfahrens nach einem der Ansprüche 1 bis 8 anhand wenigstens eines unter Nutzung eines zweiten Mobilfunknetzes (2) auf eine Verfügbarkeits- und/oder Leistungsfähigkeitsabfrage einer Einrichtung des ersten Mobilfunknetzes (1) hin ermittelten netzspezifischen Parameters und
anhand wenigstens einer seitens einer Einrichtung des zweiten Mobilfunknetzes (2) auf eine Verfügbarkeitsabfrage seitens einer Einrichtung des ersten Mobilfunknetzes (1) hin gesendeten Verfügbarkeitsantwort
wenigstens eine Verfügbarkeits- und/oder Leistungsfählgkeitsinformation hinsichtlich einer Kommunikationsverbindung (4) eines mobilen Endgerätes (3) unter Nutzung des zweiten Mobilfunknetzes (2) zu bestimmen.

## Claims

1. A method for the localisation of interferences in a communication connection (4) of a mobile terminal (3) which can be operated in mobile radio networks (1, 2),
wherein
the mobile terminal (3) uses a mobile subscriber identification module (SIM card) for an access to a mobile radio network (1, 2),
the home location register (HLR) of the mobile subscriber identification module (SIM card) of the mobile terminal (3) is located in a first mobile radio network (1),
the mobile terminal (3) is operated in a second mobile radio network (2) and
devices (6, 7) of the first mobile radio network (1) and devices (8, 9) of the second mobile radio network (2) can be connected to each other for communication purposes,
**characterized in**
**that**
an availability query is sent by a device (5; 7, DNS probe) of the first mobile radio network (1) to a device (8) of the second mobile radio network (2), which device (8) takes part in the administration of the presence of a mobile terminal (3) in the second mobile radio network (2),
as reaction to the availability query, the device (8) of the second mobile radio network (2) which takes part in the administration of the presence of a mobile terminal (3) in the second mobile radio network (2) using the second mobile radio network (2) will determine at least one network specific parameter provided by the second mobile radio network (2) with respect to the availability of a communication connection (4) of a mobile terminal (3) using the second mobile radio network (2),
the at least one determined parameter will be sent by the device (8) of the second mobile radio network (2) which takes part in the administration of the presence of a mobile terminal (3) in the second mobile radio network (2) to the device (7, DNS probe) of the first mobile radio network (1) and from this one to another device (6) of the first mobile radio network (1), the other device (6) of the first mobile radio network (1) addresses an availability query (GTP test) to a device (9) of the second mobile radio network (2), which device is involved in a communication connection (4) of a mobile terminal (3) using the second mobile radio network (2),
as reaction to the availability query, the device (9) of the second mobile radio network (2) which is involved in the communication connection (4) of a mobile terminal (3) using the second mobile radio network (2) sends an availability response back to the at least one other device (6) of the first mobile radio network (1),
and a device (5, 6, 7) of the first mobile radio network (1) determines at least one availability and/or capability information item with respect to a communication connection (4) of a mobile terminal (3) using the second mobile radio network (2) on the base of the at least one parameter and the availability response.

2. A method according to claim 1, **characterized in that** the first mobile radio network (1) determines expectable availability information and/or capability information with respect to a communication connection (4) of a mobile terminal (3) using the second mobile radio network (2) by using the at least one availability and/or capability information item with respect to a communication connection (4) of a mobile terminal (3) using the second mobile radio network (2).

3. A method according to claim 1 or claim 2, **characterized in that** the devices of the first mobile radio network (1) and the second mobile radio network (2) which can be connected to each other for communication purposes are devices of the first mobile radio network (1) and the second mobile radio network (2) which provide switching centers.

4. A method according to one of the claims 1 through 3, **characterized by** an application for services in mobile radio networks according to the GPRS and/or UMTS radio network standard, preferably by an application for packet oriented data services.

5. A method according to one of the claims 1 through 4, **characterized in that** the determined availability and/or capability information with respect to a communication connection (4) of a mobile terminal (3) using the second mobile radio network (2) is used for purposes of billing communication connections of a mobile terminal (3) which is operated in the second mobile radio network (2).

6. A method according to one of the claims 1 through 5, **characterized in that** a network node of the first mobile radio network (1) carries out the following steps:
- sending an availability query and/or capability query with respect to a communication connection (4) of a mobile terminal (3) using the second mobile radio network (2) at least to at least one network node of the second mobile radio network (2),
- receiving at least one network specific parameter with respect to the availability and/or capability of a communication connection (4) of a mobile terminal (3) using the second mobile radio network (2),
- sending an availability query (GTP test) to a network node (9) of the second mobile radio network (2), which network node (9) is involved in the communication connection (4) of a mobile terminal (3) in the second mobile radio network (2), with respect to the availability of this network node (9) in the second mobile radio network (2),
- receiving an availability response of this network node (9) of the second mobile radio network (2) which is involved in the communication connection (4) of a mobile terminal (3) in the second mobile radio network (2) as reaction to the availability query (GTP test),
- determining at least one availability and/or capability information item with respect to a communication connection (4) of a mobile terminal (3) using the second mobile radio network (2) by means of the at least one received parameter and the received availability response.

7. A method according to one of the claims 1 through 6, **characterized in that** a network node of the second mobile radio network (2) carries out the following steps:
- receiving an availability query and/or at least a capability query with respect to a communication connection (4) of a mobile terminal (3) using the second mobile radio network (2),
- determining at least one network specific parameter with respect to the availability and/or capability of a communication connection (4) of a mobile terminal (3) using the second mobile radio network (2) as reaction to the availability query and/or the capability query and
- sending the at least one determined parameter at least to at least one network node of the first mobile radio network (1).

8. A method according to one of the claims 1 through 7, **characterized in that** a network node (9) of the second mobile radio network (2) carries out the following steps:
- receiving an availability query,
- sending an availability response as reaction to the received availability query at least to at least one network node of the first mobile radio network (1).

9. A network node in a first mobile radio network (1),
which is configured and/or adapted to determine at least one availability and/or capability information item with respect to a communication connection (4) of a mobile terminal (3) using the second mobile radio network (2)
in connection with the execution of a method according to one of the claims 1 through 8
by means of at least one network specific parameter which has been determined using a second mobile radio network (2) as reaction to an availability and/or capability query of a device of the first mobile radio network (1) and
by means of at least one availability response which has been sent by a device of the second mobile radio network (2) as reaction to an availability query by a device of the first mobile radio network (1).

## Revendications

1. Procédé de localisation des interférences dans une connexion de communication (4) d'un terminal mobile (3) actionnable dans des réseaux radio mobile (1, 2),
dans lequel
le terminal mobile (3) utilise un module d'identification de mobile abonné (carte SIM) pour l'accès à un réseau radio mobile (1, 2),
le registre d'origine (home location register HLR) du module d'identification de mobile abonné (carte SIM) du terminal mobile (3) se trouve dans un premier réseau radio mobile (1),
le terminal mobile (3) est actionné dans un second réseau radio mobile (2) et
des dispositifs (6, 7) du premier réseau radio mobile (1) et des dispositifs (8, 9) du second réseau radio mobile (2) sont susceptibles d'être reliés les uns aux autres pour des buts de communication,
**caractérisé en ce**
**qu'**
un dispositif (5 ; 7, DNS probe) du premier réseau radio mobile (1) envoie une demande de disponibilité à un dispositif (8) du second réseau radio mobile (2) lequel fait partie de l'administration de la présence d'un terminal mobile (3) dans le second réseau radio mobile (2),
le dispositif (8) du second réseau radio mobile (2) lequel fait partie de l'administration de la présence d'un terminal mobile (3) utilisant le second réseau radio mobile (2) détermine, en réagissant à la demande de disponibilité, au moins un paramètre spécifique du réseau et fourni par le second réseau radio mobile (2) par rapport à la disponibilité d'une connexion de communication (4) d'un terminal mobile (3) utilisant le second réseau radio mobile (2),
l'au moins un paramètre déterminé est envoyé par le dispositif (8) du second réseau radio mobile (2) lequel fait partie de l'administration de la présence d'un terminal mobile (3) dans le second réseau radio mobile (2) au dispositif (7, DNS probe) du premier réseau radio mobile (1) et par celui-ci à un autre dispositif (6) du premier réseau radio mobile (1), l'autre dispositif (6) du premier réseau radio mobile (1) adresse une demande de disponibilité (test GTP) à un dispositif (9) du second réseau radio mobile (2) lequel contribue à une connexion de communication (4) d'un terminal mobile (3) utilisant le second réseau radio mobile (2),
le dispositif (9) du second réseau radio mobile (2) lequel contribue à une connexion de communication (4) d'un terminal mobile (3) utilisant le second réseau radio mobile (2) renvoie, en réagissant à la demande de disponibilité, une réponse de disponibilité à l'au moins un autre dispositif (6) du premier réseau radio mobile (1),
et un dispositif (5, 6, 7) du premier réseau radio mobile (1) détermine au moins une information de disponibilité et/ou de capacité par rapport à une connexion de communication (4) d'un terminal mobile (3) utilisant le second réseau radio mobile (2) à la base de l'au moins un paramètre et de la réponse de disponibilité.

2. Procédé selon la revendication 1, **caractérisé en ce que** le premier réseau radio mobile (1) détermine des informations de disponibilité et/ou de capacité à attendre par rapport à une connexion de communication (4) d'un terminal mobile (3) utilisant le second réseau radio mobile (2) à l'aide de l'au moins une information de disponibilité et/ou de capacité par rapport à une connexion de communication (4) d'un terminal mobile (3) utilisant le second réseau radio mobile (2).

3. Procédé selon la revendication 1 ou la revendication 2, **caractérisé en ce que** les dispositifs du premier réseau radio mobile (1) et du second réseau radio mobile (2) qui sont susceptibles d'être reliés les uns aux autres pour des buts de communication sont des dispositifs du premier réseau radio mobile (1) et du second réseau radio mobile (2) lesquels fournissent des centres de commutation.

4. Procédé selon l'une des revendications 1 à 3, **caractérisé par** une application pour des services dans des réseaux radio mobile selon le standard de réseau radio GPRS et/ou UMTS, de préférence par une application pour des services de données orientés aux paquets.

5. Procédé selon l'une des revendications 1 à 4, **caractérisé en ce que** les informations de disponibilité et/ou de capacité déterminées par rapport à une connexion de communication (4) d'un terminal mobile (3) utilisant le second réseau radio mobile (2) sont utilisées pour des buts de facturation des connexions de communication d'un terminal mobile (3) qui est actionné dans le second réseau radio mobile (2).

6. Procédé selon l'une des revendications 1 à 5, **caractérisé en ce qu'**un noeud du premier réseau radio mobile (1) exécute les étapes suivantes de:
- envoyer une demande de disponibilité et/ou d'une demande de capacité par rapport à une connexion de communication (4) d'un terminal mobile (3) utilisant le second réseau radio mobile (2) au moins à au moins un noeud du second réseau radio mobile (2),
- recevoir au moins un paramètre spécifique du réseau par rapport à la disponibilité et/ou à la capacité d'une connexion de communication (4) d'un terminal mobile (3) utilisant le second réseau radio mobile (2),
- envoyer une demande de disponibilité (test GTP) à un noeud (9) du second réseau radio mobile (2), le noeud (9) contribuant à la connexion de communication (4) d'un terminal mobile (3) dans le second réseau radio mobile (2), par rapport à la disponibilité de ce noeud (9) dans le second réseau radio mobile (2),
- recevoir une réponse de disponibilité de ce noeud (9) du second réseau radio mobile (2), le noeud (9) contribuant à la connexion de communication (4) d'un terminal mobile (3) dans le second réseau radio mobile (2), en tant que réaction à la demande de disponibilité (test GTP),
- déterminer au moins une information de disponibilité et/ou de capacité par rapport à une connexion de communication (4) d'un terminal mobile (3) utilisant le second réseau radio mobile (2) par moyen de l'au moins un paramètre reçu et de la réponse de disponibilité reçue.

7. Procédé selon l'une des revendications 1 à 6, **caractérisé en ce qu'**un noeud du second réseau radio mobile (2) exécute les étapes suivantes de :
- recevoir une demande de disponibilité et/ou au moins une demande de capacité par rapport à une connexion de communication (4) d'un terminal mobile (3) utilisant le second réseau radio mobile (2),
- déterminer au moins un paramètre spécifique du réseau par rapport à la disponibilité et/ou à la capacité d'une connexion de communication (4) d'un terminal mobile (4) utilisant le second réseau radio mobile (2) en tant que réaction à la demande de disponibilité et/ou à la demande de capacité et
- envoyer l'au moins un paramètre déterminé au moins à au moins un noeud du premier réseau radio mobile (1).

8. Procédé selon l'une des revendications 1 à 7, **caractérisé en ce qu'**un noeud (9) du second réseau radio mobile (2) exécute les étapes suivantes de :
- recevoir une demande de disponibilité,
- envoyer une réponse de disponibilité en tant que réaction à la demande de disponibilité reçue au moins à au moins un noeud du premier réseau radio mobile (1).

9. Noeud dans un premier réseau radio mobile (1),
qui est configuré et/ou adapté à déterminer au moins une information de disponibilité et/ou de capacité par rapport à une communication (4) d'un terminal mobile (3) utilisant le second réseau radio mobile (2) en rapport avec l'exécution d'un procédé selon l'une des revendications 1 à 8
par moyen d'au moins un paramètre spécifique du réseau qui a été déterminé en utilisant un second réseau radio mobile (2) en tant que réaction à une demande de disponibilité et/ou de capacité d'un dispositif du premier réseau radio mobile (1) et
par moyen d'au moins une réponse de disponibilité qui a été envoyée par un dispositif du second réseau radio mobile (2) en tant que réaction à une demande de disponibilité par un dispositif du premier réseau radio mobile (1).
